(19) Europäisches Patentamt / European Patent Office / Office européen des brevets

(11) **EP 4 372 503 B1**

(12) **EUROPÄISCHE PATENTSCHRIFT**

(45) Veröffentlichungstag und Bekanntmachung des Hinweises auf die Patenterteilung:
**20.05.2026   Patentblatt 2026/21**

(21) Anmeldenummer: **23201692.3**

(22) Anmeldetag: **04.10.2023**

(51) Internationale Patentklassifikation (IPC):
*G05B 19/418* (2006.01)     *B26D 5/00* (2006.01)
*B26D 7/30* (2006.01)     *B26D 7/32* (2006.01)
*B65B 5/06* (2006.01)     *B65B 9/04* (2006.01)
*B65B 25/06* (2006.01)     *B65B 35/04* (2006.01)
*B65B 35/44* (2006.01)     *B65B 57/00* (2006.01)
*B65B 57/16* (2006.01)     *B65G 47/22* (2006.01)

(52) Gemeinsame Patentklassifikation (CPC):
**B26D 7/32; B26D 5/00; B65B 5/06; B65B 9/04; B65B 25/06; B65B 35/04; B65B 35/44; B65B 57/00; B65B 57/16; G05B 19/41865;** B26D 7/30; B26D 2210/02; G05B 2219/45048

(54) **VERFAHREN ZUM BETREIBEN EINER VERPACKUNGSLINIE SOWIE HIERFÜR GEEIGNETE VERPACKUNGSLINIE**

METHOD FOR OPERATING A PACKAGING LINE AND PACKAGING LINE SUITABLE THEREFOR

PROCÉDÉ DE FONCTIONNEMENT D'UNE LIGNE D'EMBALLAGE ET LIGNE D'EMBALLAGE APPROPRIÉE À CET EFFET

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **16.11.2022   DE 102022130350**

(43) Veröffentlichungstag der Anmeldung:
**22.05.2024   Patentblatt 2024/21**

(73) Patentinhaber: **MULTIVAC Sepp Haggenmüller SE & Co. KG**
**87787 Wolfertschwenden (DE)**

(72) Erfinder:
• **Gropper, Daniel**
**87737 Boos (DE)**
• **Schilling, Pascal**
**88299 Leutkirch (DE)**

(74) Vertreter: **Weickmann & Weickmann PartmbB Richard-Strauss-Strasse 80 81679 München (DE)**

(56) Entgegenhaltungen:
**DE-A1- 102017 105 919     DE-A1- 102021 102 385**
**DE-A1- 102021 105 098**

**Beschreibung**

**I. Anwendungsgebiet**

Die Erfindung betrifft eine Verpackungslinie bestehend aus

- einer Verpackungsmaschine,
- einer Aufschneide-Maschine, etwa einem Slicer, die auch eine Abförder-Einheit umfasst,
- einer Einlege-Zufuhreinheit dazwischen,

um gewichtsgeprüfte Portionen aus einer oder mehreren von der Aufschneider-Maschine abgetrennten Scheiben der Einlege-Station der Verpackungsmaschine in der richtigen zeitlichen Einlege-Taktung und ggf. mit dem Spurabstand der mehrspurigen Verpackungsmaschine korrekt ausgerichtet zuzuführen.

Sowohl die Abförder-Einheit als auch die Einlege-Zufuhreinheit bestehen aus in Durchlaufrichtung durch die Maschine mehreren hintereinander angeordneten Förderbändern und bei mehrspurigen Maschinen aus auch jeweils quer dazu mehreren nebeneinander angeordneten Förderbändern.

Eine solche Einlege-Zufuhreinheit wird in der Praxis Einleger oder Einlegelinie genannt. Die Einlege-Zufuhreinheit und die Abförder-Einheit der Aufschneidemaschine bilden gemeinsam eine Transportstrecke, über die die Portionen von der Entstehung bis zum Einlegen in oder auf das Verpackungselement transportiert werden müssen.

Im Folgenden wird häufig der Slicer angesprochen, was jedoch die Erfindung nicht auf diese Bauform von Aufschneide-Maschinen beschränken soll.

**II. Technischer Hintergrund**

Auch bei einer solchen Verpackungslinie steht deren Leistung im Vordergrund, meist angegeben in Form der Taktzeit, mit der die sich in aller Regel schrittweise vorwärtsbewegenden Verpackungselemente in der Verpackungsmaschine bewegt werden.

Denn bei der Verpackungsmaschine handelt es sich meist um eine Tiefzieh-Verpackungsmaschine, bei der unmittelbar stromaufwärts der Einlege-Station, an der die Portionen auf oder in den Verpackungselementen abgelegt werden, ein Band aus tiefziehfähiger Kunststoff-Folie im Stillstand abschnittweise tiefgezogen wird, wodurch Verpackungs-Mulden in dem Folienband ausgebildet werden, meist pro Tiefziehvorgang in Durchlaufrichtung pro Spur hintereinander mehrere Verpackungs-Mulden.

Die bei einem einzigen Tiefziehvorgang hergestellte Anzahl und Anordnung von Verpackungsmulden bzw. die entsprechende Anzahl und Anordnung von in diese Mulden einzulegenden Portionen wird als Format bezeichnet. Da es sich in der Regel um mehrspurige Aufschneidemaschinen und auch mehrspurige Verpackungsmaschinen handelt, bilden die Mulden und entsprechenden Portionen in ein zweidimensionales Format.

Da sich aufgrund des schrittweisen Tiefziehvorganges (Tiefzieh-Takt) das FolienBand auch an der Einlege-Station schrittweise vorwärts bewegt, muss an der Einlege-Station bei dessen Vorwärtsbewegung taktweise (Einlege-Takt = Tiefzieh-Takt) jeweils ein vollständiges Format an Portionen in das entsprechende Format von Mulden eingelegt werden.

Die Einlege-Zufuhreinheit leistet einerseits die Zusammenstellung der Portionen zu den richtigen Formaten und an den richtigen Positionen der Einlege-Zufuhreinheit und stellt andererseits einen Puffer für Portionen und ganze Formate dar, damit im Fall einer Unterbrechung des Aufschneide-Betriebes - was regelmäßig eintritt beim Beladen des Slicers mit einem oder mehreren neuen Produkt-Kalibern - die Verpackungsmaschine gespeist aus diesem Puffer weiter arbeiten kann.

Aus diesem Grund ist die Aufschneide-Leistung des Slicers in der Regel geringfügig höher als die Einlege-Leistung der Verpackungsmaschine, bei einer Tiefzieh-Verpackungsmaschine in der Regel deren Tiefzieh-Leistung oder eine andere die Leistung der Verpackungsmaschine begrenzende Leistung.

Dennoch sinkt die durchschnittliche Taktfrequenz und damit die Einlege-Leistung (mit umgekehrt analog steigender Takt-Zeit) der Verpackungsmaschine bei einer Unterbrechung des Aufschneide-Betriebes ab, aber nicht während der Unterbrechung, denn in dieser Zeit wird ja die Verpackungsmaschine aus dem Puffer gespeist, sondern nach Wiederaufnahme des Aufschneide-Betriebes, da Zeit benötigt wird, um die Lücke zwischen dem letzten im Einleger befindlichen Format und den nach der Unterbrechung neu produzierten Portionen auf der Transportstrecke zu schließen.

Dieser Rückgang der Taktfrequenz könnte verkürzt werden, indem die Aufschneide-Leistung des Slicers sehr viel höher gewählt wird als die Leistung der Verpackungsmaschine, was jedoch einen hohen Zusatzaufwand auf Seiten des Slicers darstellt.

Als Puffer-Bänder innerhalb der Einlege-Zufuhreinheit und aus dem gleichen Grund innerhalb der Abförder-Einheit kommen nicht alle Förderbänder in Betracht, denn ein Pufferband muss auch nach einem Stillstand die auf ihm lagernden einen oder mehreren Portionen Positions-genau an das nachfolgende Band übergeben können.

Da die Verpackungselemente, insbesondere das Mulden-Band, während ihrer Bewegungsphasen eine definierte Laufgeschwindigkeit besitzt, muss auch das letzte Band der Einlege-Zufuhreinheit, das sogenannte Einlegeband, welches das auf ihm befindliche Format z.B. in die Mulden hinein abwirft, beim Einlegen die gleiche Laufgeschwindigkeit besitzen und damit häufig auch die vorgelagerten Bänder, insbesondere Pufferbänder.

Ein Förderband kann somit bereits deshalb als Pufferband ausscheiden, weil es zu kurz ist, um eine darauf lagernde Portion beim in Betrieb setzen bis zum Ende dieses Förderbandes auf diese Laufgeschwindigkeit zu bringen. Falls auf diesem Pufferband hintereinander mehr als eine Portion Platz findet, kann auch nur eine oder ein Teil dieser Portion-Positionen als Puffer-Position freigegeben sein, da für diese vorgenannte Bedingung erfüllt ist, eine oder einige andere Puffer-Positionen auf diesem Pufferband jedoch hierfür nicht freigegeben sein, nachfolgend als Nicht-Pufferposition bezeichnet.

Ebenso kommt ein Förderband nicht als Pufferband in Frage, wenn es nicht von einem Servo-Motor angetrieben wird, da es dann zeitlich und hinsichtlich seines Geschwindigkeitsprofiles nicht exakt steuerbar ist, weshalb keine synchrone und Positions-genaue Übergabe an ein nachfolgendes Band möglich ist.

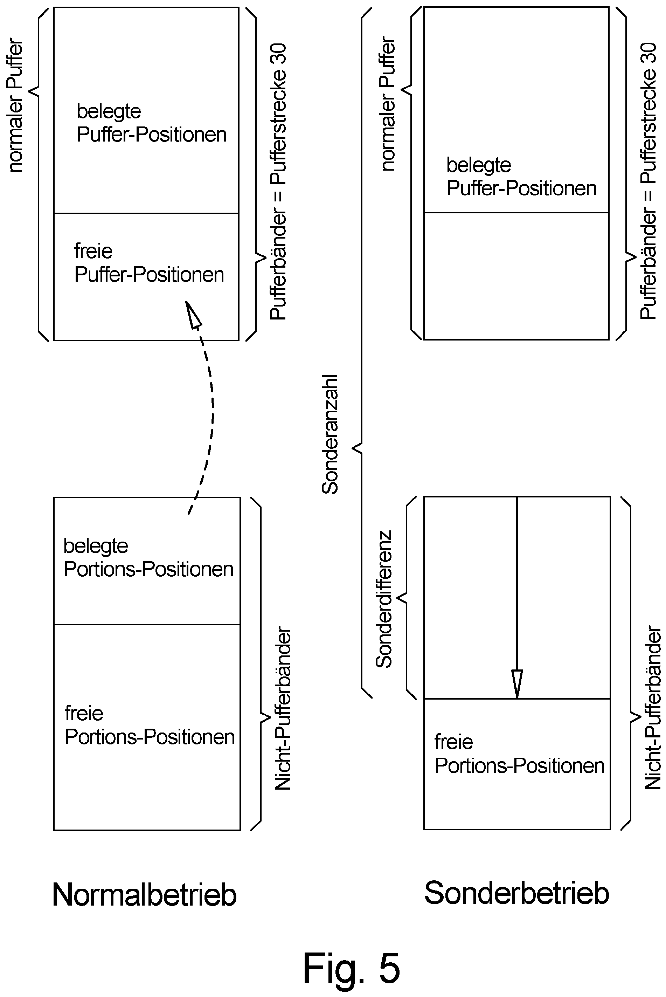

Deshalb sind - siehe **Figur 5** - nur bestimmte Förderbänder innerhalb der Verpackungslinie als Pufferbänder zugelassen, die anderen, die sogenannten Nicht-Pufferbänder, dagegen nicht.

Funktionen wie Wiegen der Portionen, Ausschleusen von Ausschuss-Portionen, Einstellen der nebeneinander laufenden Portionen auf den Spurabstand der Verpackungsmaschine, Drehen und Ausrichten der Portionen etc. werden in der Regel von den Förderbändern der Abförder-Einheit des Slicers oder den nachfolgenden ersten Bändern der Einlege-Zufuhreinheit geboten, indem dieseentsprechend ausgebildete Förderbänder enthalten.

Die Druckschrift DE 10 2021 102385 A1 offenbart ein Verfahren gemäß dem Oberbegriff des Anspruchs 1. Ferner wird auf die DE 10 2017 105919 A1 und die DE 10 2021 105098 A1 hingewiesen.

### III. Darstellung der Erfindung

### a) Technische Aufgabe

Es ist daher die Aufgabe gemäß der Erfindung, ein Verfahren zum Betrieb einer Verpackungslinie zur Verfügung zu stellen, welches das Ansteigen der durchschnittlichen Taktzeit der Verpackungsmaschine aufgrund einer Unterbrechung des Aufschneide-Betriebes der Aufschneidemaschine zu minimieren und insbesondere zu vermeiden, sowie eine hierfür geeignete Verpackungslinie zur Verfügung zu stellen, ohne den baulichen Aufwand für die Verpackungslinie nennenswert zu erhöhen.

### b) Lösung der Aufgabe

Diese Aufgabe wird durch die Merkmale der Ansprüche 1 und 6 gelöst. Vorteilhafte Ausführungsformen ergeben sich aus den Unteransprüchen.

Hinsichtlich des <u>Verfahrens</u> zum Betreiben einer Verpackungslinie, die wie dargelegt üblicherweise umfasst

- einer <u>Verpackungsmaschine</u> mit einer Einlegestation, in der eine Portion auf oder in einem Verpackungsmittel abgelegt wird,
- einer einspurigen oder mehrspurigen Aufschneidemaschine, insbesondere einem <u>Slicer</u>, zum Abtrennen von Scheiben von einem Produkt-Kaliber, einschließlich einer Abförder-Einheit mit mehreren Förderbändern für die Scheiben, die in der Lage ist, mehrere Scheiben wenigstens teilweise zu einer Portion aufeinander zu legen,
- einer in Durchlaufrichtung dieser nachgelagerten horizontalen <u>Einlege-Zufuhreinheit</u> zum Puffern und Zuführen der Portionen zur Einlegestation mittels mehrerer mit steuerbaren Servo-Antrieben ausgestatteten Förderbänder, von denen zumindest ein Teil als Pufferband genutzt wird,

wobei

- die Abförder-Einheit und die Einlege-Zufuhreinheit gemeinsam eine Transportstrecke für die Portionen bilden,

wird im <u>Normalbetrieb</u> die Aufschneidemaschine nur mit einer solchen realen Aufschneide-Leistung betrieben, dass - pro Spur - die auf der Transportstrecke vorhandene Anzahl der Portionen maximal der Anzahl der in der Pufferstrecke insgesamt vorhandenen Ablage-Positionen für je eine Portion, den Puffer-Positionen, entspricht.

Dadurch ist sichergestellt, dass im Fall einer Unterbrechung des Einlege-Vorganges an der Einlegestelle und in der Folge sofortigen Stopp des Aufschneide-Betriebes die auf der Transportstrecke stromaufwärts der Pulverstrecke vorhandenen Portionen weitertransportiert werden können in die Pufferstrecke und dort allesamt Platz finden.

Da die dortigen Pufferbänder jeweils über Servo-Motoren als Antrieb verfügen, kann nach einem Neustart des Einlege-Betriebes der Inhalt der Pufferstrecke nach und nach korrekt an der Einlegestelle auf oder in das Verpackungselement eingelegt werden.

Die reale Aufschneide-Leistung ist die abgetrennte Anzahl von Scheiben pro Zeiteinheit und insbesondere pro Spur. Die maximale Aufschneide-Leistung, die durch die maximale Drehzahl des Messers der Aufschneide-Maschine begrenzt ist, ist in der Regel etwas höher.

Zum Einstellen der Aufschneidemaschine auf eine vorgegebene, reale Aufschneide-Leistung wird jedoch nicht die Drehzahl des Messers reduziert, sondern mit der Drehzahl gearbeitet, die die maximale Anzahl von Scheiben pro Zeiteinheit ergeben würde, wenn bei jeder Drehung des Messers auch Scheiben abgetrennt würden. Jedoch wird eine solche Anzahl von Leerschnitten vorgesehen - in denen das Messer mangels Kontakt mit dem Kaliber keine Scheibe abtrennt - dass statt der möglichen, maximalen Aufschneide -Leistung die gewünschte niedrigere, reale Aufschneide-Leistung vorliegt.

Unter einer Ablage-Position für eine Portion wird derjenige Raum, vor allem die Erstreckung in Transportrichtung, verstanden, an der auf einem Förderband eine Portion abgelegt werden kann. Wenn also in Transportrichtung auf einer Spur eines Förderbandes hintereinander zwei Portionen Platz finden, aber eine dritte Portion nicht mehr Platz hat, besitzt dieses Förderband zwei Ablagepositionen.

Wenn beispielsweise die Pufferstrecke vier Pufferbänder umfasst, von denen jedes so lang ist, dass es zwei Ablage-Positionen für je eine Portion aufweist, so besitzt die Pufferstrecke insgesamt acht Ablagepositionen.

Die bestehende Aufgabe wird dadurch gelöst, dass im Sonderfall einer absehbaren Unterbrechung des Aufschneide-Betriebes der Aufschneidemaschine diese in einem Vorlauf-Zeitraum vor der Unterbrechung die Aufschneidemaschine temporär mit einer demgegenüber so viel höheren realen Aufschneide-Leistung betrieben wird, dass pro Spur die in der Pufferstrecke vorhandene Anzahl der Portionen eine Sonder-Anzahl erreicht, die um eine vorgegebene Sonder-Differenz höher ist als die Anzahl der Puffer-Positionen auf der Pufferstrecke.

Die Anzahl der normalen Puffer-Positionen auf der Puffer-Strecke ergibt also zusammen mit der zusätzlich im Sonderbetrieb freigegebenen Sonder-Differenz die erhöhte Sonder-Anzahl an Portionen, die auf der gesamten Transportstrecke maximal vorhanden sein dürfen, also

$$\text{Anzahl Puffer-Positionen} + \text{Sonder-Differenz} = \text{erhöhte Sonder-Anzahl.}$$

Man setzt bei dieser Lösung also darauf, dass in der kurzen Zeit des Sonderbetriebes, in der die Transportstrecke stärker mit Portionen belegt ist als im Normalbetrieb, also im Wesentlichen der Zeit der Unterbrechung des Aufschneide-Betriebes des Slicers, vermutlich kein Stillstand der Zuförder-Einlegeeinheit und/oder der Abförder-Einheit des Slicers durch andere Umstände zusätzlich erzwungen werden wird, sondern diese weiterlaufen und die Zuförder-Einlegeeinheit weiterhin die Verpackungsmaschine durch schrittweise Vorwärtsbewegung mit Formaten versorgt.

Damit werden laufend Puffer-Positionen auf der Zuförder-Einlegeeinheit frei, denn ansonsten müssten die - insbesondere auf Nicht-Pufferbändern befindlichen Portionen - ausgeschleust oder zumindest von Hand eingelegt werden, da sie automatisch nicht mehr Positions-genau an die nachfolgenden Bänder übergeben werden könnten.

Vorzugsweise wird dabei die Sonder-Differenz so festgelegt, dass die Sonder-Anzahl pro Spur maximal der Gesamtanzahl der in der Transportstrecke vorhandenen Ablage-Positionen für Portionen entspricht. Dadurch ist sichergestellt, dass für jede auf der Transportstrecke vorhandene Portion auch eine eigene Ablage-Position zur Verfügung steht.

Um das beschriebene Risiko möglichst gering zu halten, wird der Zeitraum der erhöhten Belegung möglichst kurz gehalten. Zu diesem Zweck wird erfindungsgemäß der Vorlauf-Zeitraum unmittelbar vor den Stopp des Aufschneide-Betriebes gelegt.

Aus dem gleichen Grund wird die Länge des Vorlauf-Zeitraumes so gewählt, dass die Sonder-Anzahl erst mit dem letzten Schneidvorgang vor dem Stopp des Aufschneide-Betriebes erreicht wird.

Ebenso wird der Vorlauf-Zeitraum insbesondere so spät wie möglich begonnen, insbesondere so spät, dass gerade noch die gewünschte Sonder-Anzahl bis zur Unterbrechung aufgebaut werden kann.

In der Regel werden die Verpackungsmittel in der Verpackungsmaschine schrittweise vorwärts bewegt unter Aufnahme eines aus mehreren Portionen - in Transportrichtung hintereinander und bei einer mehrspurigen Maschine in Querrichtung mehreren Portionen nebeneinander - bestehenden Formates. Dabei werden die Formate mit Hilfe der Einlege-Zufuhreinheit aus einzelnen Portionen zusammengestellt.

Dann entspricht die Sonder-Anzahl pro Spur maximal der Portions-Anzahl pro Spur von zwei Formaten, maximal der Portions-Anzahl pro Spur von nur einem Format, um die zusätzliche Belegung nicht zu stark in die Höhe zu treiben.

Sollte es dennoch während der Zeit des Sonder-Betriebes, also der erhöhten Belegung der Transportstrecke, zu einem Stillstand der Abförder-Einheit und/oder der Einleger-Zufuhreinheit kommen, so werden in der Regel beim Wiederanfahren die auf den Nicht-Pufferbändern befindlichen Portionen aus der Verpackungslinie ausgeschleust werden und/oder von Hand auf die Verpackungsmittel gelegt werden.

Eine Verpackungslinie für das Herstellen und Verpacken von Portionen aus je einer oder mehreren von einem Produkt-Kaliber abgetrennten Scheiben umfasst in der Regel bekanntermaßen

- eine Verpackungsmaschine mit einer Einlegestation, in der eine Portion auf oder in einem Verpackungselement abgelegt werden kann,
- eine einspurige oder mehrspurige Aufschneidemaschine, insbesondere einen Slicer, zum Abtrennen von Scheiben von einem Produkt-Kaliber, einschließlich einer Abförder-Einheit mit meist mehreren Förderbändern für die Scheiben, darunter einem Portionier-Band, welches in der Lage ist, mehrere Scheiben zu einer Portion wenigstens teilweise aufeinander zu legen,
- eine in Durchlaufrichtung dieser nachgelagerte horizontale Einlege-Zufuhreinheit zum Puffern und Zuführen der Portionen zur Einlegestation mittels mehrerer Förderbänder, von denen zumindest ein Teil als Pufferband genutzt werden kann,
- eine Steuerung zur Steuerung beweglicher Teile der Verpackungslinie.

Hinsichtlich einer solchen Verpackungslinie wird die bestehende Aufgabe erfindungsgemäß dadurch gelöst, dass die Verpackungslinie, insbesondere deren Steuerung, so ausgebildet ist, dass sie in der Lage ist, das vorstehend beschriebene Verfahren durchzuführen.

Dadurch werden die anhand des Verfahrens beschriebenen Vorteile erzielbar.

Vorzugsweise umfasst die Verpackungslinie hierfür

- ein Portionierband zum wenigstens teilweisen Aufeinanderlegen von Scheiben zu Portionen insbesondere
- ein darauf folgendes Austragband zum Abtransportieren der Portion vom Portionierband und/oder
- ein Übergabeband zum Übergeben einer Portion an eine nachfolgende Einheit, insbesondere eine Abförder-Zufuhreinheit und/oder
- ein Wiegeband mit einer Waage zum Wiegen einer Portion und/oder
- ein Wippen-Band zum Ausschleusen einer Portion und/oder
- ein Verteilerband oder Spreizband zum Beabstanden der Portionen vom Spurabstand des Slicers auf den Spurabstand der Verpackungsmaschine und/oder
- ein Ausgleichsband zum Anordnen der einander entsprechenden Portionen auf den verschiedenen Spuren auf der gleichen Längsposition und/oder
- ein Formatband zum Positions-genauen Zusammenstellen von Portionen zu wenigstens einem Format und/oder
- wenigstens ein Pufferband zum Puffern wenigstens einer Portion, insbesondere wenigstens eines ganzen Formates, und/oder
- ein Einlegeband zum Abwerfen eines Formates auf wenigstens ein Verpackungselement.

Mithilfe dieser Förderbänder in der Verpackungslinie kann der beabsichtigte Zweck sehr einfach erreicht werden.

**c) Ausführungsbeispiele**

Ausführungsformen gemäß der Erfindung sind im Folgenden beispielhaft näher beschrieben. Es zeigen:

**Figuren 1a, b:** eine Aufschneide-Maschine in Form eines Slicers gemäß dem Stand der Technik in unterschiedlichen perspektivischen Ansichten, mit in die Aufschneide-Stellung hochgeklapptem Zufuhrband,

**Figur 2a, b:** die Aufschneide-Maschine der **Figuren 1a, b** in der Seitenansicht mit entfernten Verkleidungsteilen, sodass die verschiedenen Förderbänder besser zu erkennen sind, bei Figur 2b demgegenüber mit in die Belade-Stellung herabgeklapptem Zufuhr-band,

**Figur 3a:** eine Verpackungslinie in der Seitenansicht mit Beladungszustand im Normalbetrieb,

**Figur 3b:**     die Verpackungslinie der **Figur 3a** in einer vierspurigen Bauform in der Aufsicht von oben,

**Figur 4a:**     eine Verpackungslinie in der Seitenansicht mit Beladungszustand im <u>Sonderbetrieb</u> kurz vor einer Unterbrechung des Aufschneide-Betriebes,

**Figur 4b:**     die Verpackungslinie der **Figur 4a** in einer vierspurigen Bauform in der Aufsicht von oben,

**Figur 5:**     ein Blockdiagramm mit enthaltenen Positionen,

**Figur 6a, b:**     Zeitdiagramme mit der Beladung einer Transportstrecke im Normalbetrieb und im Sonderbetrieb.

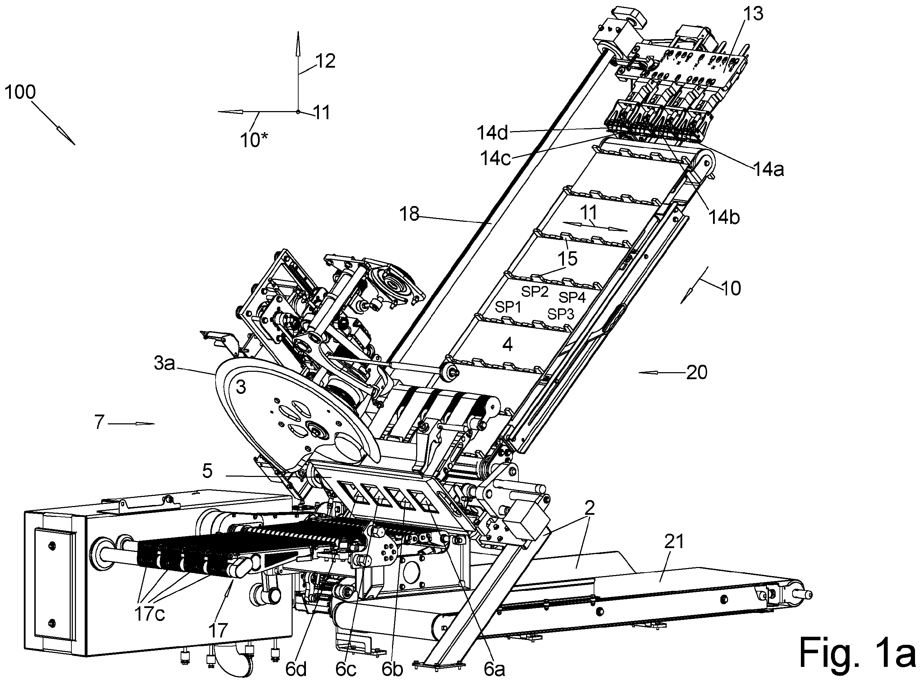

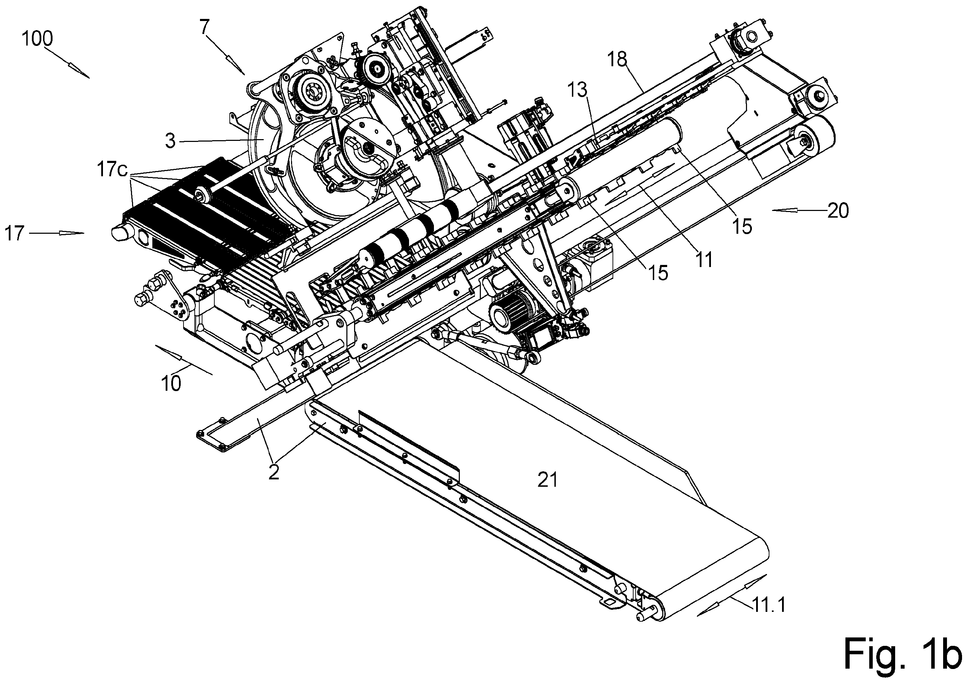

Die **Figuren 1a, 1b** zeigen unterschiedliche perspektivische Ansichten eines bekannten, mehrspurigen Slicers 100 zum gleichzeitigen Aufschneiden von mehreren - in diesen beiden Figuren nicht dargestellten - Produkt-Kalibern K auf jeweils einer Spur SP1 bis SP4 nebeneinander und Ablegen in geschindelten Portionen P aus je mehreren Scheiben S mit einer generellen Durchlaufrichtung 10* durch den Slicer 1 von rechts nach links.

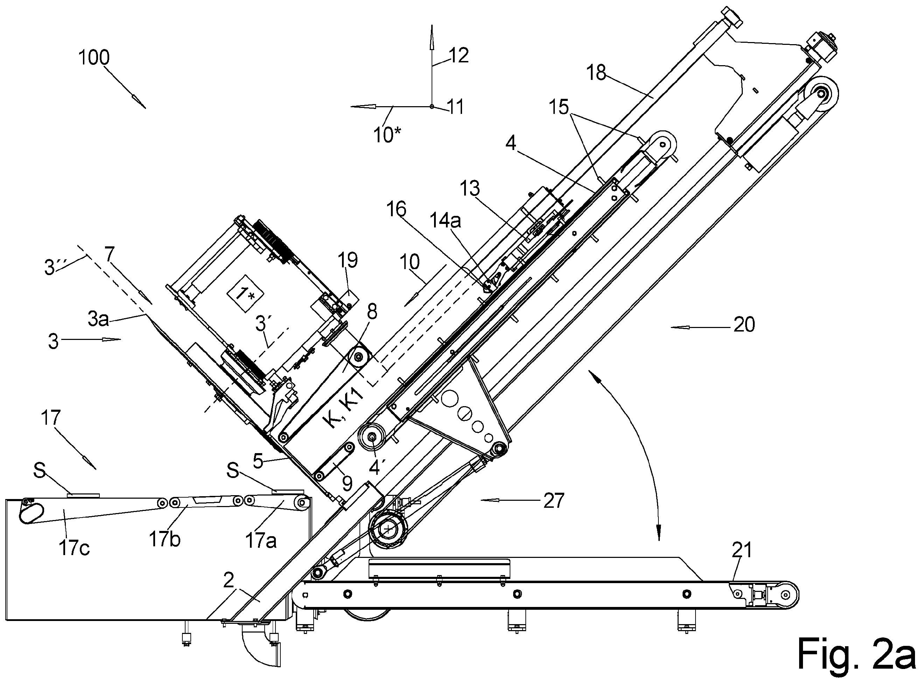

**Figur 2a** zeigt - mit eingelegtem Kaliber K - eine Seitenansicht dieses Slicers 1 unter Weglassen für die Erfindung nicht relevanter Abdeckungen und anderer Teile, die ebenso wie alle anderen Einheiten am Grundgestell 2 befestigt sind, sodass die funktionalen Teile, vor allem die Förderbänder, besser zu erkennen sind. Die Längsrichtung 10 ist die Zufuhrrichtung der Kaliber K zur Schneideinheit 7 und damit auch die Längsrichtung der im Slicer 1 liegenden Kaliber K.

Dabei ist zu erkennen, dass der Grundaufbau eines Slicers 100 nach dem Stand der Technik darin besteht, dass einer Schneideinheit 7 mit um eine Messerachse 3' rotierenden Messer 3, hier einem Sichelmesser 3, mehrere, in diesem Fall vier, quer zur Zufuhrrichtung 10 nebeneinander auf einem Zuförderer 4 liegende Produkt-Kaliber K mit Abstandshaltern 15 des Zuförderers 4 dazwischen von dieser Zufuhreinheit 20 zugeführt werden, von deren vorderen Enden das rotierende Messer 3 mit seiner Schneidkante 3a jeweils in einem Arbeitsgang, also fast gleichzeitig, eine Scheibe S abtrennt.

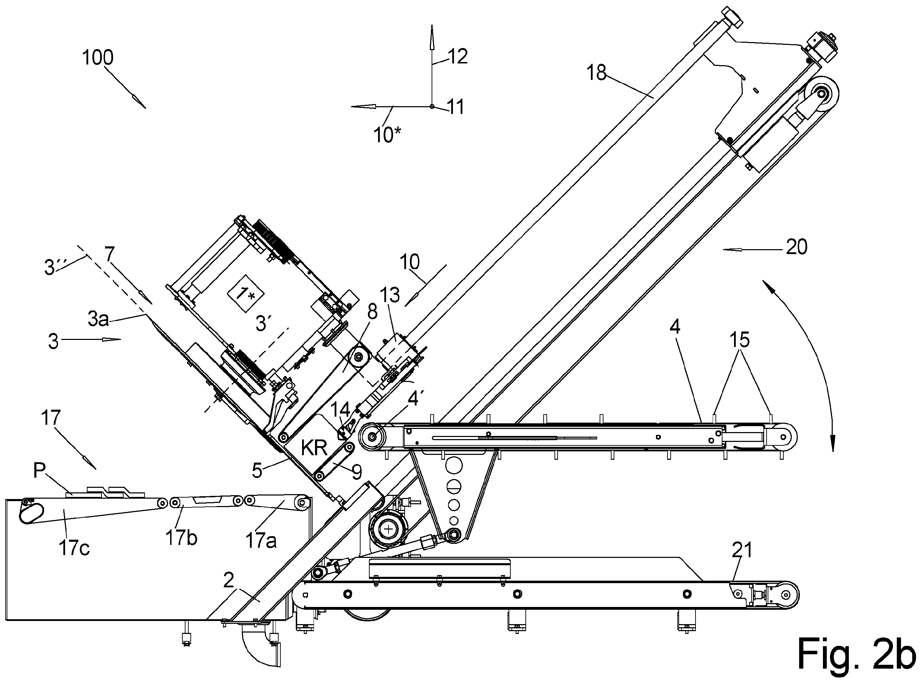

Für das Aufschneiden der Produkt-Kaliber K befindet sich der Zuförderer 4 in der in den **Figuren 1a, b sowie 2a** dargestellten, in der Seitenansicht schrägen Aufschneide-Stellung mit tiefliegendem schneidseitigem, vorderen Ende und hochliegendem, hinteren Ende, aus der er um eine in seiner Breitenrichtung, der ersten Querrichtung 11, verlaufende Schwenkachse 20', die sich in der Nähe der Schneideinheit 7 befindet, herabgeklappt werden kann gemäß **Figur 2b** in eine etwa horizontale Belade-Stellung.

Das hintere Ende jedes in der Zufuhreinheit 20 liegenden Kalibers K ist - siehe **Figuren 2a, b -** jeweils von einem Greifer 14a - d formschlüssig mit Hilfe von aktivierbaren und deaktivierbaren Greiferklauen 16 gehalten. Die Greifer 14a - 14d sind an einem gemeinsamen Greifer-Schlitten 13 befestigt, welcher entlang einer Greifer-Führung 18 in Zufuhrrichtung 10 nachgeführt werden kann.

Dabei ist sowohl der Vorschub des Greifer-Schlitten 13 als auch des Zuförderers 4 gesteuert antreibbar, wobei jedoch die konkrete Zufuhrgeschwindigkeit der Kaliber K durch eine ebenfalls gesteuert angetriebene, sogenannte obere und untere Produkt-Führung 8, 9 bewirkt wird, die an der Oberseite und Unterseite der aufzuschneidenden Kaliber K in deren vorderen Endbereichen nahe der Schneideinheit 7 angreifen:
Die vorderen Enden der Kaliber K werden jeweils durch eine sogenannte Produkt-Öffnung 6a - d eines plattenförmigen Schneidrahmens 5 geführt, wobei unmittelbar vor der vorderen, schräg nach unten weisenden Stirnfläche des Schneidrahmens 5 die Schneidebene 3" verläuft, in der das Messer 3 mit seiner Schneidkante 3a rotiert und damit den Überstand der Kaliber K aus der Schneidrahmen 5 als Scheibe S abtrennt, wie besser in der Prinzip Darstellung der **Figu-ren 3a, b** ersichtlich. Die Schneidebene 3" verläuft lotrecht zum Obertrum des Zuförderers 4 und/oder wird von den beiden Querrichtungen 11, 12 zur Zufuhrrichtung 10 aufgespannt.

Dabei dient der Innenumfang der Produktöffnungen 6a - d der Schneidkante 3a des Messers 3 als Gegenschneide.

Da beide Produktführungen 8, 9 gesteuert antreibbar sind, insbesondere unabhängig voneinander und/oder eventuell für jede Spur SP1 bis SP4 separat, bestimmen diese die - kontinuierliche oder getaktete - Vorschubgeschwindigkeit der Kaliber K durch den Schneidrahmen 5.

Unterhalb der Zuförder-Einheit 20 - siehe **Figuren 1a, b** - befindet sich meist ein etwa horizontal verlaufender Resteförderer 21, welcher mit seinem vorderen Ende unterhalb der Schneidrahmen 5 und unmittelbar unter oder hinter der Abförder-Einheit 17 beginnt und mit seinem Obertrum dort darauf - mittels des Antriebes eines der Abförderer 17 entgegen der Durchlaufrichtung 10 - fallende Reste nach hinten abtransportiert.

Die bei Abtrennung schräg im Raum stehenden Scheiben S fallen auf eine unterhalb des Schneidrahmens 5 beginnende und in Durchlaufrichtung 10* verlaufende Abförder-Einheit 17, die in diesem Fall aus in Durchlaufrichtung 10* mehreren mit ihren Obertrumen etwa fluchtend hintereinander angeordneten Abförderern 17a, b, c besteht, von denen der in Durchlaufrichtung 10 erste Abförderer 17a als Portionier-Band 17a ausgebildet sein kann.

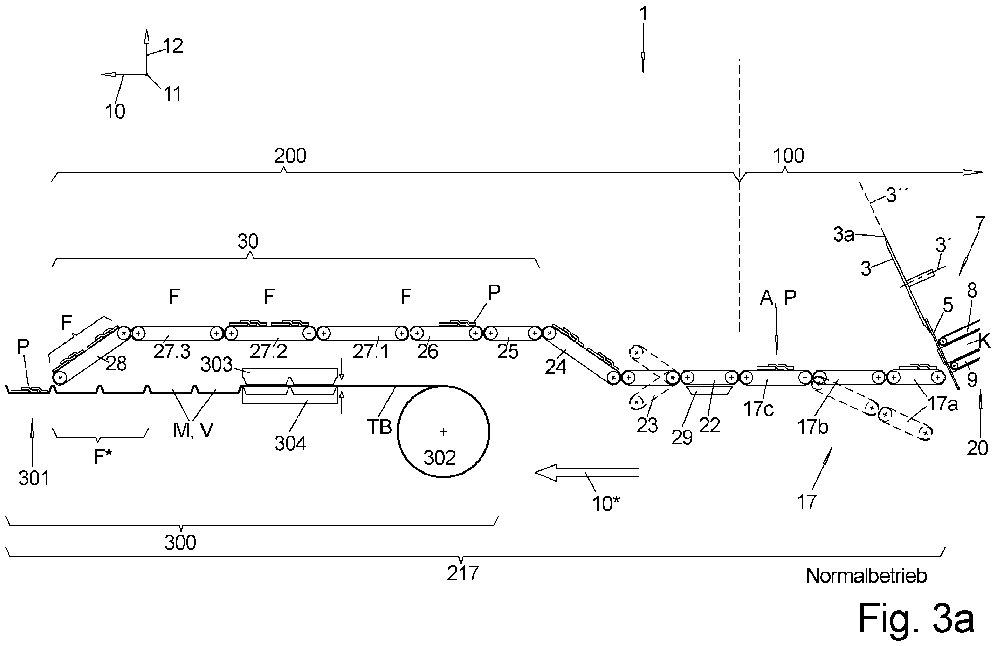

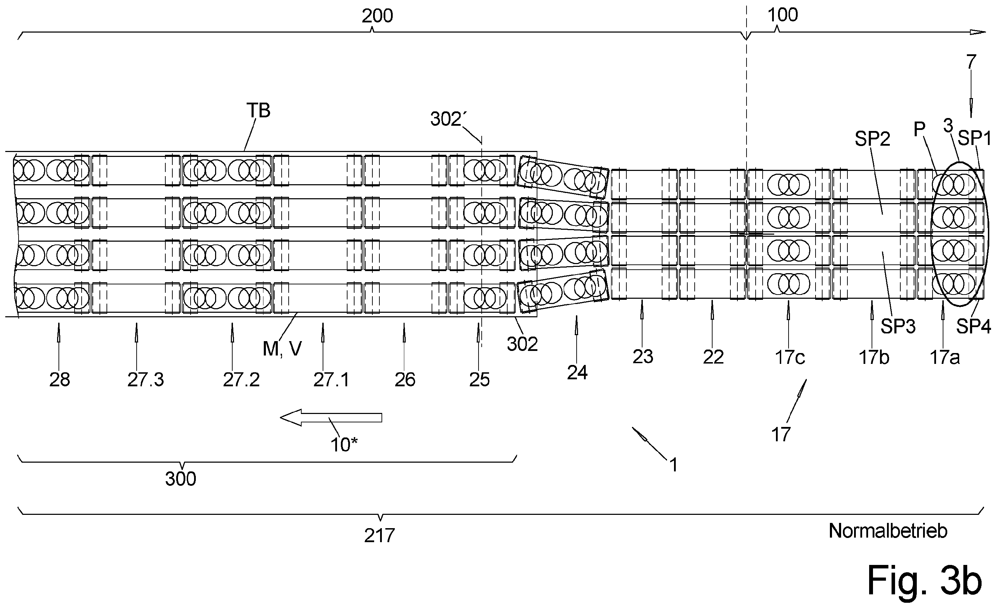

Die Scheiben S können einzeln und in Durchlaufrichtung 10* beabstandet zueinander auf der Abförder-Einheit 17 auftreffen oder durch entsprechende Steuerung des Portionier-Bandes 17a der Abförder-Einheit 17 - dessen Bewegung wie fast alle beweglichen Teile von der Steuerung 1* gesteuert wird - geschindelte (siehe **Figuren 3a, b**) oder gestapelte Portionen P bilden durch meist schrittweises Vorwärtsbewegung des Portionier-Bandes 17a.

**Figur 3a** zeigt in der Seitenansicht eine Verpackungslinie 1 mit einer Zufuhr-Einlegeeinheit 200 in Durchlaufrichtung 10* anschließend an einen Slicer 100, mit dessen Abförder-Einheit 17, sowie eine durch das Muldenband angedeutete Verpackungsmaschine 300, in deren Mulden M hinein die Zufuhr-Einlegeeinheit 200 die Portionen P ablegt, insbesondere eine Portion P aus je drei Scheiben S wie dargestellt.

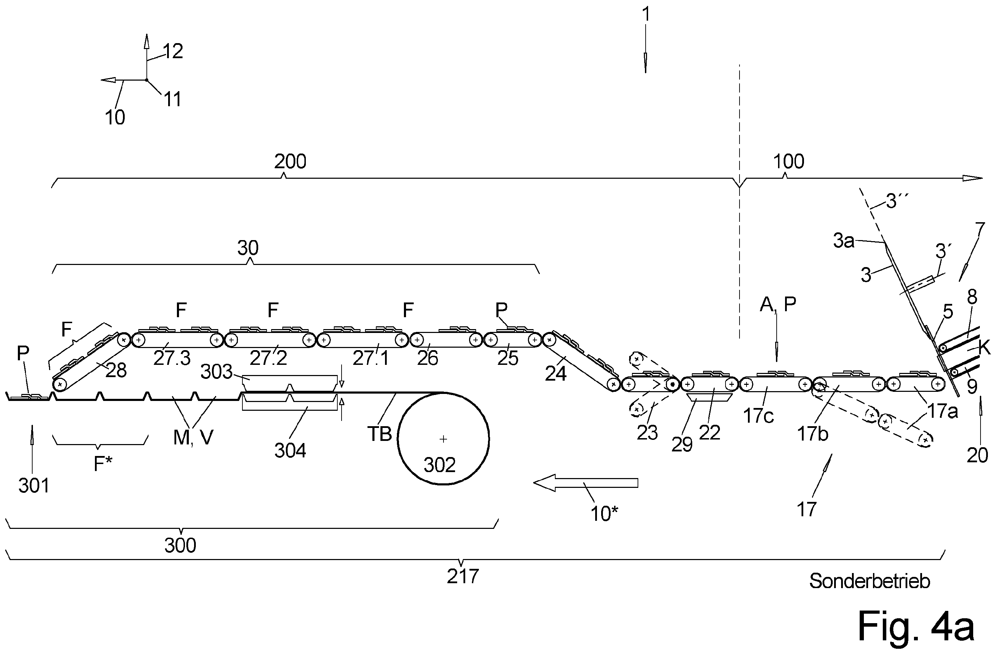

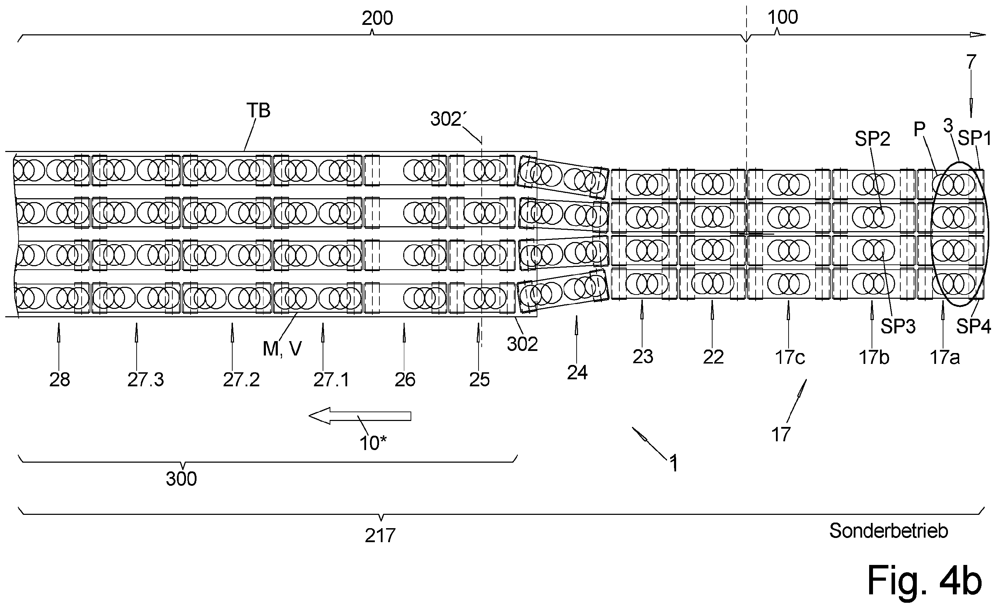

Die Seitenansicht der **Figuren 3a, 4a** gilt sowohl für eine einspurige Verpackungslinie 1 als auch für eine in Blickrichtung dieser Figuren mit mehreren hintereinanderliegenden Spuren mehrspurige Verpackungslinie 1, etwa einer vierspurigen Verpackungslinie 1, wie in der Aufsicht der **Figuren 3b, 4b** und analog zu den **Figuren 3a, 4a** als auch für den Slicer in den **Figuren 1a bis 2b** dargestellt.

Die in den **Figuren 3a, b, 4a, b** dargestellte Verpackungslinie 1 umfasst auf jeder der Spuren SP 1 bis SP4 von der Schneideinheit 7 aus stromabwärts folgende Förderbänder:
Portionierband 17a, Austragband 17b und Übergabeband 17c als Bestandteil der in aller Regel noch zum Slicer 100 gehörenden Abförder-Einheit 17.

Stromabwärts, andere unmittelbar stromabwärts, davon, vorzugsweise in dieser Reihenfolge,

- ein Wiegeband 22 mit einer Waage 29 zum Wiegen einer darauf befindlichen Portion P,
- ein gesteuertes Ausschleusband 23, vorzugsweise ausgebildet als gesteuert verschwenkbares Wippenband 23, zum Ausschleusen einer fehlgewichtigen Portionen P,
- ein Verteilerband 24, häufig auch Spreizband 24 genannt, um die in Querrichtung 11 nebeneinander befindlichen Portionen vom Spurabstand des Slicers 100 auf den Spurabstand der Verpackungsmaschine 300 zu bringen,
- ein Ausgleichsband 25, um die in Querrichtung 11 nebeneinander befindlichen Portionen P auf die exakt gleiche Längsposition in Durchlaufrichtung 10* zu bringen,
- Formatband 26, um die entsprechende Anzahl von Portionen P - in diesem Fall pro Spur zwei Portionen P hintereinander - für ein Format F zusammen und auf den richtigen Längsabstand zu bringen und so fertige Formate F zu bilden.

Daran schließt sich stromabwärts die eigentliche Pufferstrecke 30 an, bestehend aus einem oder mehreren, im vorliegenden Fall drei, Puffer-Bändern 27.1 - 27.3, wobei im vorliegenden Fall das Ausgleichsbank 25 und das Format Bd. 26 ebenfalls noch zur Pufferstrecke 30 gehören, da sie ebenfalls - außer den oben genannten Funktionen - auch eine Puffer-Funktion erfüllen als Puffer-Bänder.

Die Puffer-Bänder 27.3 und 27.2 können jeweils mindestens ein Format F an Portionen P aufnehmen, dass Puffer-Band 27.1 dagegen nur einen Teil eines Formates F, in diesem Fall nur eine Portion, während das unmittelbar vorgelagerte sogenannte Formatband 26 ebenfalls eine Portion P aufnehmen kann, sodass beide gemeinsam ein Format F puffern können, insbesondere in der richtigen Relativlage der beiden Portionen P aus denen sie besteht, zueinander, vor allem in Durchlaufrichtung 10*.

Am Ende folgt das schräg nach unten gerichtete Einlegeband 28, welches das darauf vorgehaltene Format F aus in diesem Fall acht Portionen P auf das darunter durchlaufende Tiefziehband TB in das dortige analoge Format F* aus Mulden M des Tiefziehbandes TB ablegt, wofür das Tiefziehband TB und das Einlegeband 28 auf dieselbe Geschwindigkeit in Durchlaufrichtung 10* gebracht werden.

Es versteht sich von selbst, dass die aufeinanderfolgenden Bänder so eng zueinander angeordnet sind, dass sie in der Lage sind, eine entsprechende Portion P vom stromaufwärts liegenden vorherigen Band zu übernehmen und an das stromabwärts liegende nächste Band weiterzugeben.

Die Länge des Formates F, F* in Durchlaufrichtung 10* und/oder die Taktfrequenz sowie die Geschwindigkeit in deren Bewegungsphasen werden dadurch vorgegeben, wieviele Mulden M in Durchlaufrichtung 10* hintereinander - und natürlich in Querrichtung 11 nebeneinander, dies in der Regel gleichzeitig über alle Spuren - in der Tiefzieh-Station zwischen dem Oberwerkzeug 303 und dem Unterwerkzeug 304 aus dem ebenen Tiefziehband TB tiefgezogen werden.

Vorliegend umfasst ein Format F* in Durchlaufrichtung 10* hintereinander pro Spur SP1 - SP4 zwei Mulden M und analog ein Format F zwei Portionen P pro Spur SP1 - SP4.

Dabei zeigen die **Figuren 3a, b** - pro Spur SP1 - SP4 - die Beladungs-Menge an Portionen P auf der gesamten Transportstrecke 217 im Normalbetrieb zu einem willkürlichen Zeitpunkt, denn die hier dargestellten 9 Portionen pro Spur SP1 - SP4 können auch auf anderen Förderbändern als den dargestellten liegen.

Im Normalbetrieb sind es im vorliegenden Fall deshalb 9 Portionen, weil die Pufferstrecke 30, also vom Ausgleichs-Band 25 bis zum Einlege-Band 28 jeweils einschließlich pro Spur SP1 - SP4 9 Ablagepositionen für jeweils eine Portion P bietet.

Die im dargestellten Zustand über die gesamte Transportstrecke 217 verteilten Portionen könnten also weitertransportiert werden, bis sie sich alle innerhalb der Pufferstrecke 30 befinden, von wo aus auch nach einem Stillstand von Bändern der Transportstrecke eine Position-genaue Weitergabe und Einlegen in die Mulden M als Verpackungsmittel V möglich wäre.

Zum dargestellten Zeitpunkt befinden sich in den **Figuren 3a, b** also innerhalb der Pufferstrecke 30

- zwei Portionen P hintereinander pro Spur auf dem Einleger-Band 28,
- zwei Portionen P hintereinander pro Spur auf dem Puffer-Band 27.2,
- eine Portion P auf dem Ausgleichs-Band 25,

wobei die Bänder 25 und 26 gemeinsam die Funktion eines Format-Bandes erfüllen, auf denen in Summe zwei Portionen P hintereinander pro Spur SP1 - SP4 im richtigen Abstand zueinander angeordnet werden.

Stromaufwärts der Pufferstrecke 30 befindet sich pro Spur

- zwei Portionen P auf dem Verteiler-Band 24
- eine Portion auf dem Übergabe-Band 17c der Abförder-Einheit 17 und
- eine Portion auf dem Portionier-Band 17a der Abförder-Einheit 17.

Die **Figuren 4a, b** zeigen dagegen die Beladungs-Menge an Portionen P auf der gesamten Transportstrecke 217 im Sonderbetrieb zum Zeitpunkt des Stopps des Aufschneide-Betriebes oder unmittelbar davor.

Dabei wurden als Sonder-Differenz pro Spur 8 Portionen freigegeben, sodass gegenüber dem Normalbetrieb mit 9 Portionen pro Spur gemäß **Figur 3a, b** nun in **Figur 4a, b** pro Spur 17 Portionen auf der Transportstrecke vorhanden sind.

Die zusätzlich freigegebenen 8 Portionen sind die zuletzt erstellten Portionen, wobei während deren Herstellung die übrigen Portionen P entsprechend weitertransportiert wurden, sodass vor allem die Pufferstrecke 30 nun stärker, im vorliegenden Fall vollständig, beladen ist, indem nun gegenüber dem Zustand der **Figuren 3a, b** zusätzlich auch auf den Pufferbändern 27.1 und 27.3 jeweils zwei Portionen P hintereinander vorhanden sind, also auf diesen beiden Pufferbändern jeweils ein Format F vorhanden ist und auch auf dem Format-Band 26 eine Portion P pro Spur vorhanden ist.

**Figur 5** zeigt links für den Normalbetrieb, dass im Aufschneidebetrieb - in dem die Verpackungslinie 1 ja ein rollierendes System darstellt - in dem normalen Puffer bestehend aus den Pufferbändern der Pufferstrecke 30 nur so viele Ablagepositionen für Portionen, also Puffer-Positionen, belegt sind, dass die dort noch vorhandenen freien Puffer-Positionen mindestens der - vorliegend genau der - Anzahl der auf den vorgelagerten Nicht-Pufferbändern 17a bis 24 vorhandenen Portions-Positionen, die belegten Portions-Positionen, darin Platz finden würden wenn sie - wie beispielsweise für den Sonderbetrieb notwendig - dorthin weitertransportiert wurden, gemäß dem gestrichelten Pfeil in **Figur 5 links**.

In dem in **Figur 5 rechts** dargestellten Sonderbetrieb ist dies bereits geschehen, sodass der normale Puffer in Form der Pufferstrecke 30 vollständig belegt ist.

Für den Sonderbetrieb wird nun jedoch eine Sonderdifferenz an weiteren Portions-Positionen für die Aufnahme von zu produzierenden Portionen P freigegeben und auch befüllt, die zusammen mit dem normalen Puffer die freigegebene Sonderanzahl ergibt. Im vorliegenden Fall ist die freigegebene Sonderdifferenz die gesamte Anzahl von freien Portions-Positionen, über welche die Nicht-Pufferbänder verfügen.

Daraus wird klar, dass - sofern es während der Unterbrechung des Aufschneide-Betriebes zu keinem Stillstand der Einlege-Zufuhreinheit 200 kommt - während der Unterbrechung des Aufschneide-Betriebes die Verpackungsmaschine 300 nicht nur aus der Pufferstrecke 30, sondern aus der gesamten Einlege-Zufuhreinheit 200 mit Formaten F versorgt werden kann.

Währenddessen werden die vor allem im stromaufwärtigen Bereich der Einlege-Zufuhreinheit 200 entstehenden freien Portions-Positionen nach Wiederaufnahme des Aufschneide-Betriebes vom Slicer 100 - der dann Portionen P schneller erzeugt, als sie die Verpackungsmaschine 300 verbraucht - schneller geschlossen als während des Normalbetriebes bis zum Beginn der Unterbrechung des Aufschneide-Betriebes.

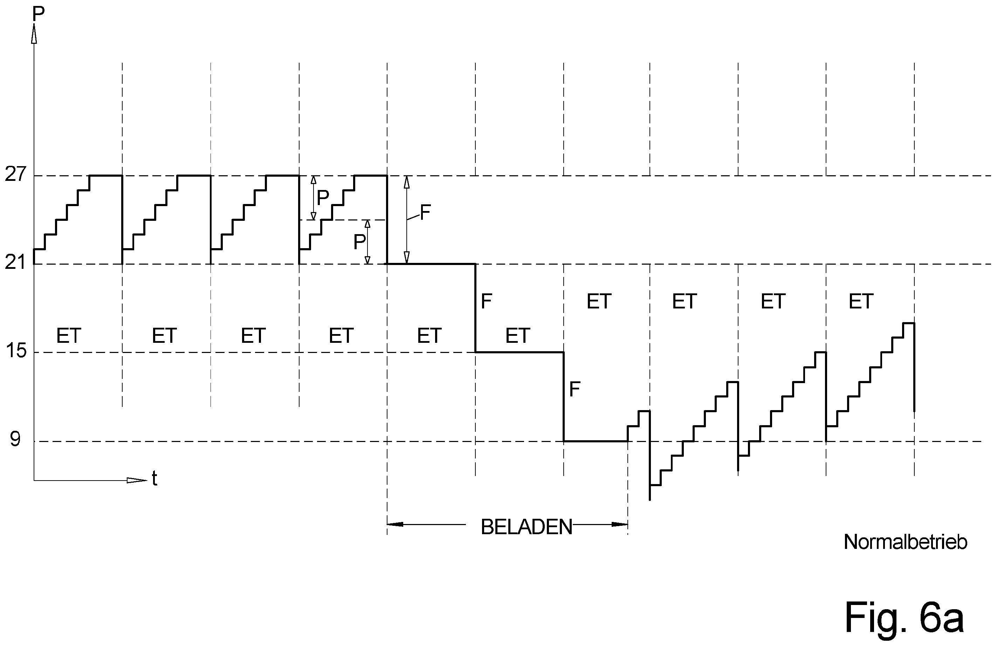

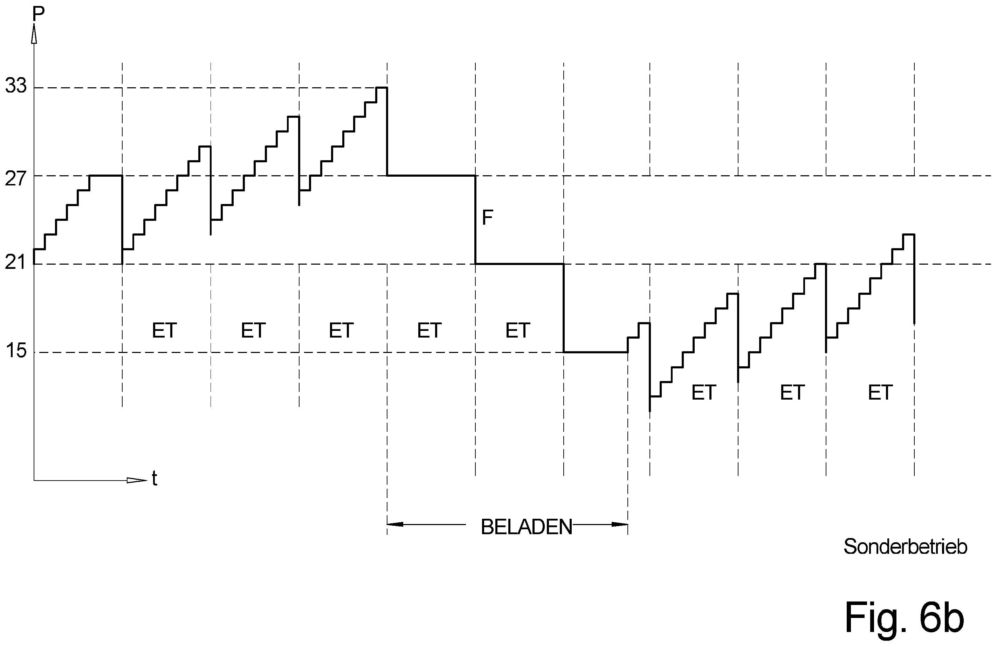

Wie dies geschieht und zu welchem Zweck, verdeutlichen die **Figuren 6a, b** anhand der zeitlichen Veränderung der auf einer Spur SP1 - SP4 einer anderen Transportstrecke vorhandenen Portionen P mit einer höheren Belade-Kapazität als der in den Figuren 3a bis 4b dargestellten Transportstrecke 217, insbesondere während eines Stillstandes des Slicers 100, typischerweise aufgrund eines notwendigen Belade-Vorganges:

Einerseits gibt wie bei der Einlegelinie 1 gemäß der **Figuren 3a bis 4b** auch in den **Figuren 6a, b** die Einlege-Zufuhreinheit 200 über ihr Einlege-Band 28 nach jeweils einer Einlege-Taktzeit ET an der Einlege-Station 301 ein Format F an die Verpackungsmaschine 300 ab.

Andererseits kann der Slicer 100 der in regelmäßigen zeitlichen Abständen entsprechend der Umlaufzeit des Messers jeweils eine Scheibe S pro Spur erzeugen kann, innerhalb einer Einlege-Taktzeit ET mehr als die für ein Format benötigten 6 Scheiben pro Spur herstellen, nämlich 8 Scheiben. Im Normalbetrieb werden deshalb nach Herstellung der für ein Format F benötigten 6 Scheiben innerhalb einer Einlege-Taktzeit ET zwei Leerschnitte durchgeführt, z.B. indem hierfür das Kaliber K geringfügig nach hinten zurückgezogen wird und dadurch keinen Kontakt mit dem Messer 3 mehr hat.

Somit ändert sich die Belegung der Transportstrecke 217 mit Portionen P zyklisch beispielsweise zwischen 21 und 27 Portionen.

Wird gemäß **Figur 6a** der Slicer 100 angehalten, um ihn neu zu beladen - was in diesem Fall fast drei Einlege-Taktzeiten ET benötigt - so werden in diesem Zeitraum taktweise Formate F aus der Transportstrecke 217 entnommen, wodurch die Belegung in diesem in **Figur 6a** angenommenen Fall bis auf 5 - bei einer sonst üblichen Belegung zwischen 21 und 27 - abgesunken ist, wenn die Erzeugung von Scheiben durch den Slicer 100 wieder beginnt.

Da man nach dem Beladen die durchschnittliche Belegung der Transportstrecke 217 als Sicherheitsmaßnahme wieder auf dasselbe Niveau und damit dieselbe Puffergröße erhöhen will wie vor der Beladung, werden während der ersten Einlege-Taktzeiten ET keine Leerschnitte des Slicers 100 durchgeführt, sodass er in einer Einlege-Taktzeit ET acht statt sechs Scheiben S pro Spur produziert.

Wie ersichtlich, wird eine erhebliche Anzahl von Einlege-Taktzeiten ET benötigt, um eine Belegung der Transportstrecke wie vor der Betriebsunterbrechung des Slicers 100 zu erreichen.

Verbessert wird dies erfindungsgemäß durch Einführung eines Sonderbetriebs gemäß **Figur 6b**, in dem bereits vor der - absehbaren - Unterbrechung des Aufschneide-Betriebes die Belegung der Transportstrecke mit Portionen P erhöht wird, indem - hier in den letzten Einlege-Taktzeiten ET vor der Unterbrechung des Aufschneide-Betriebes - der Slicer 100 keine Leerschnitte mehr durchführt und pro Einlege-Taktzeit ET - in diesem Fall wiederum - acht statt sechs Scheiben S pro Einlege-Taktzeit ET produziert, wodurch die Transportstrecke unmittelbar vor der Unterbrechung des Aufschneidebetriebes eine Belegung mit 33 Portionen erreicht.

Bei gleicher Dauer des Belade-Vorganges sinkt dadurch die Belegung am Ende des Aufschneide-Betriebes nur noch auf 11 ab, und dementsprechend wird bei entsprechendem Betrieb des Slicers nach Ende der Betriebsunterbrechung des Slicers zunächst ohne Leerschnitte, umso schneller das ursprüngliche Beladungs-Niveau erreicht.

Dieser Vorteil überwiegt den Nachteil, dass während der Überbelegung der Transportstrecke kurz vor dem Stopp des Slicers 100 ein zusätzlicher Stopp der Einlege-Zufuhreinheit 200 dazu führen würde, dass einige Portionen P entweder von Hand in die Verpackungsmaschine 300 eingelegt werden müssten oder zu Ausschuss würden.

BEZUGSZEICHENLISTE

| | |
|---|---|
| 1 | Verpackungslinie |
| 1* | Steuerung |
| 2 | Grundgestell |
| 3 | Messer |
| 3 | Rotationsachse |
| 3" | Messerebene, Schneidebene |
| 3a | Schneidkante |
| 4 | Zuförderer, Zufuhr-Band |
| 5 | Schneidrahmen |
| 6a - d | Produkt-Öffnung |
| 7 | Schneideinheit |
| 8 | obere Produktführung, oberes Führungsband |
| 8.1 | Kontakt-Trum, Unter-Trum |
| 8a | Brillen-seitige Umlenkrolle |
| 8b | Brillen-abgewandte Umlenkrolle |
| 9 | untere Produktführung, unteres Führungsband |
| 8.1 | Kontakt-Trum, Ober-Trum |
| 9a | Brillen-seitige Umlenkrolle |
| 9b | Brillen-abgewandte Umlenkrolle |
| 10 | Zufuhrrichtung Kaliber |
| 10* | Durchlaufrichtung durch Maschine |
| 11 | 1. Querrichtung, Breitenrichtung |
| 12 | Vertikale |
| 13 | Greifer-Einheit, Greifer-Schlitten |
| 14,14 a - d | Greifer |
| 15 | Abstandshalter |
| 16 | Greifer-Klaue |

| 17 | Abförder-Einheit |
|---|---|
| 17a, b, c | Abförder-Band |
| 17a | Portionierband |
| 18 | Greifer-Führung |
| 19 | Höhen-Sensor |
| 20 | Zufuhreinheit |
| 21 | Reststück-Förderer |
| 22 | Wiege-Band |
| 23 | Ausschleus-Band, Wippen-Band |
| 24 | Verteiler-Band |
| 25 | Ausgleichs-Band |
| 26 | Format-Band |
| 27.1/.2/.3 | Puffer-Band |
| 28 | Einlege-Band |
| 29 | Waage |
| 30 | Puffer-Strecke |

| 100 | Aufschneide-Maschine, Slicer |
|---|---|
| 200 | Einlege-Zufuhreinheit |
| 217 | Transportstrecke |
| 300 | Verpackungsmaschine |
| 301 | Einlege-Station |
| 302 | Vorratsrolle |
| 303 | Oberwerkzeug |
| 304 | Unterwerkzeug |

| A | Artikel |
|---|---|
| ET | Einlege-Taktzeit |
| F, F* | Format |
| K | Produkt, Produkt-Kaliber |
| M | Mulde |
| S | Scheibe |
| SP1-SP4 | Spur |
| TB | Tiefzieh-Band |
| P | Portion |
| V | Verpackungsmittel |

**Patentansprüche**

1. **Verfahren** zum Betreiben einer Verpackungslinie (1) mit

- einer Verpackungsmaschine (300) mit einer Einlegestation (301), in der eine Portion (P) auf oder in einem Verpackungsmittel (V) abgelegt wird,
- einer einspurigen oder mehrspurigen Aufschneidemaschine (100), insbesondere einem Slicer (100), zum Abtrennen von Scheiben (S) von einem Produkt-Kaliber (K), einschließlich einer Abförder-Einheit (17) mit mehreren Förderbändern hintereinander für die Scheiben (S), die in der Lage ist, mehrere Scheiben (S) zu einer Portion (P) wenigstens teilweise aufeinander zu legen,
- einer in Durchlaufrichtung (10*) dieser nachgelagerten horizontalen Einlege-Zufuhreinheit (200) zum Puffern und Zuführen der Portionen (P) zur Einlegestation (301) mittels mehrerer Förderbänder, von denen die innerhalb einer Pufferstrecke (30) angeordneten und mit steuerbaren Servo-Antrieben ausgestatteten Förderbänder als Pufferbänder genutzt werden,
- wobei die Abförder-Einheit (17) und die Einlege-Zufuhreinheit (200) gemeinsam eine Transportstrecke (217) für die Portionen (P) bilden,
- im Normalbetrieb die Aufschneidemaschine (100) nur mit einer solchen realen Aufschneide-Leistung betrieben wird, dass pro Spur die auf der Transportstrecke vorhandene Anzahl der Portionen (P) maximal der Anzahl der in der Pufferstrecke (30) vorhandenen Ablage-Positionen für je eine Portion (P), den Puffer-Positionen, entspricht, **dadurch gekennzeichnet, dass**
- im Sonderfall einer absehbaren Unterbrechung des Aufschneide-Betriebes der Aufschneidemaschine (1) in

10

einem Vorlauf-Zeitraum vor der Unterbrechung die Aufschneidemaschine (100) temporär mit einer demgegenüber so viel höheren realen Aufschneide-Leistung betrieben wird, dass pro Spur (SP1 - SP4) die in der Transportstrecke (217) vorhandene Anzahl der Portionen (P) eine Sonder-Anzahl erreicht, die um eine vorgegebene Sonder-Differenz höher ist als die Anzahl der Puffer-Positionen auf der Pufferstrecke (30), also freie und belegte Puffer-Positionen + freigegebene Sonder-Differenz = erhöhte Sonder-Anzahl der Portionen auf der gesamten Transportstrecke (217), wobei der Vorlauf-Zeitraum unmittelbar vor den Stopp des Aufschneide-Betriebes gelegt wird und die Länge des Vorlauf-Zeitraumes so gewählt wird, dass die Sonder-Anzahl mit dem letzten Schneidvorgang vor dem Stopp des Aufschneide-Betriebes erreicht wird.

2. Verfahren nach einem der vorhergehenden Ansprüche,
   **dadurch gekennzeichnet, dass**
   die Sonder-Anzahl pro Spur (SP1 - SP4) maximal der Gesamtanzahl der in der Transportstrecke (217) vorhandenen Ablage-Positionen für Portionen (P) entspricht.

3. Verfahren nach einem der vorhergehenden Ansprüche,
   **dadurch gekennzeichnet, dass**

   - der Vorlauf-Zeitraum so spät wie möglich begonnen wird,
   - insbesondere so spät, dass gerade noch die gewünschte Sonder-Anzahl bis zur Unterbrechung des Aufschneide-Betriebes aufgebaut werden kann.

4. Verfahren nach einem der vorhergehenden Ansprüche, wobei

   - die Verpackungsmittel (V) in der Verpackungsmaschine (300) schrittweise vorwärts bewegt werden unter Aufnahme eines pro Spur (SP1 - SP4) aus mehreren Portionen bestehenden Formates (F),
   - mit Hilfe der Einlege-Zufuhreinheit (200) Portionen (P) zu Formaten (F) zusammengestellt werden.

   **dadurch gekennzeichnet, dass**
   die Sonder-Anzahl pro Spur (SP1 - SP4) maximal der Portions-Anzahl pro Spur (SP1 - SP4) von zwei Formaten (F), maximal der Portions-Anzahl pro Spur (SP1 - SP4) von einem Format (F), entspricht.

5. Verfahren nach einem der vorhergehenden Ansprüche,
   **dadurch gekennzeichnet, dass**
   im Falle eines Stillstandes der Abförder-Einheit (17) und/oder der Einlege-Zufuhreinheit (200) die auf den Nicht-Pufferbändern befindlichen Portionen beim Wiederanfahren aus der Verpackungslinie (1) ausgeschleust werden.

6. **Verpackungslinie (1)** für das Herstellen und Verpacken von Portionen (P) aus je einer oder mehreren von einem Produkt-Kaliber (K) abgetrennten Scheiben (S), umfassend

   - eine Verpackungsmaschine (300) mit einer Einlegestation (301), in der eine Portion (P) auf oder in einem Verpackungselement (V) abgelegt werden kann,
   - eine einspurige oder mehrspurige Aufschneidemaschine (100), insbesondere einen Slicer (100), zum Abtrennen von Scheiben (S) von einem Produkt-Kaliber (K), einschließlich einer Abförder-Einheit (17) mit mehreren Förderbändern (17a, b, c) für die Scheiben (S), darunter einem Portionier-Band (17a), welches in der Lage ist, mehrere Scheiben (S) zu einer Portion (P) wenigstens teilweise aufeinander zu legen,
   - eine in Durchlaufrichtung (10*) dieser nachgelagerte horizontale Einlege-Zufuhreinheit (200) zum Puffern und Zuführen der Portionen (P) zur Einlegestation (301) mittels mehrerer Förderbänder, von denen die innerhalb einer Pufferstrecke (30) angeordneten und mit steuerbaren Servo-Antrieben ausgestatteten Förderbänder als Pufferbänder genutzt werden,
   - eine Steuerung (1*) zur Steuerung beweglicher Teile der Verpackungslinie (1),
   **dadurch gekennzeichnet, dass**
   - die Steuerung (1*) der Verpackungslinie (1) so ausgebildet ist, dass sie in der Lage ist, das Verfahren gemäß einem der vorhergehenden Ansprüche durchzuführen.

7. Verpackungslinie nach Anspruch 6,
   **dadurch gekennzeichnet, dass**
   die Abförder-Einheit (17) außer dem Portionierband (17a) weiterhin umfasst

- ein darauf folgendes Austragband (17b) zum Abtransportieren der Portion (P) vom Portionierband (17a) und/oder
- ein Übergabeband (17c) zum Übergeben einer Portion (P) an eine nachfolgende Einheit, insbesondere eine Abförder-Zufuhreinheit (200).

8. Verpackungslinie nach Anspruch 6 oder 7,
**dadurch gekennzeichnet, dass**
die Verpackungslinie (1) umfasst

- ein Wiegeband (22) mit einer Waage (29) zum Wiegen einer Portion (P)
und/oder
- ein Ausschleus-Band (23), insbesondere ein Wippen-Band (23) zum Ausschleusen einer Portion (P)
und/oder
- ein Verteilerband (24) oder Spreizband (24), um nebeneinander laufende Portionen (P) auf den Spurabstand der Verpackungsmaschine (300) zu bringen und/oder
- ein Ausgleichsband (25) um nebeneinander laufende Portionen (P) in durch Laufrichtung (10) auf die exakt gleiche Position zu bringen
und/oder
- ein Formatband (26) zum Positions-genauen Zusammenstellen von Portionen (P) zu wenigstens einem Format (F)
und/oder
- wenigstens ein Pufferband (27.1, 27.2, 27.3) zum Puffern wenigstens eines Formates (F)
und/oder
- ein Einlegeband (28) zum Übergeben, insbesondere Abwerfen, eines Formates (F) auf wenigstens ein Verpackungsmittel (V).

**Claims**

1. A **method** for operating a packaging line (1) having

   - a packaging machine (300) having an infeed station (301) in which a portion (P) is stored on or in a packaging means (V),
   - a single-track or multi-track slicing machine (100), in particular a slicer (100), for cutting slices (S) from a product calibre (K), including a discharge unit (17) with a plurality of conveyor belts one behind the other for the slices (S), which is capable of placing a plurality of slices (S) at least partially on top of one another to form a portion (P),
   - a horizontal infeed unit (200) downstream of the latter in the direction of travel (10*) for buffering and feeding the portions (P) to the infeed station (301) by means of a plurality of conveyor bands, of which the conveyor bands arranged within a buffer route (30) and equipped with controllable servo drives are used as buffer bands,
   - wherein the discharge unit (17) and the infeed unit (200) together form a transport route (217) for the portions (P),
   - in normal operation the slicing machine (100) is operated only with such a real cutting power that per track the number of portions (P) present on the transport route corresponds at most to the number of deposit positions present in the buffer route (30) for one portion (P) each, the buffer positions,
   **characterised in that**
   - in the special case of a foreseeable interruption of the cutting operation of the slicing machine (1) in a preliminary period before the interruption, the slicing machine (100) is temporarily operated with a real cutting power which is so much higher in comparison, that per track (SP1 - SP4) the number of portions (P) present in the transport route (217) reaches a special number which is higher by a predetermined special difference than the number of buffer positions on the buffer route (30), i.e. free and occupied buffer positions + released special difference = increased special number of portions on the entire transport route (217), wherein the preliminary period is placed immediately before the stop of the cutting operation and the length of the preliminary period is selected in such a manner that the special number is reached with the last cutting process before the stop of the cutting operation.

2. The method according to any of the preceding claims,
   **characterised in that**
   the special number per track (SP1 - SP4) corresponds to a maximum of the total number of storage positions for portions (P) available in the transport route (217).

3. The method according to any of the preceding claims,
   **characterised in that**

   - the preliminary period is started as late as possible,
   - particularly so late that the desired special number can just be built up until the cutting operation is interrupted.

4. The method according to any of the preceding claims, wherein

   - the packaging means (V) are moved forward step by step in the packaging machine (300) with receptacle of a format (F) consisting of several portions per track (SP1 - SP4),
   - with the help of the infeed unit (200), portions (P) are assembled into formats (F).

   **characterised in that**
   the special number per track (SP1 - SP4) corresponds at most to the portion number per track (SP1 - SP4) of two formats (F), at most to the portion number per track (SP1 - SP4) of one format (F).

5. The method according to any of the preceding claims,
   **characterised in that**
   in the event of a standstill of the discharge unit (17) and/or the infeed unit (200), the portions located on the non-buffer bands are discharged from the packaging line (1) when the line is restarted.

6. A **packaging line (1)** for the production and packaging of portions (P) each comprising one or more slices (S) separated from a calibre of product (K), comprising

   - a packaging machine (300) having an infeed station (301) in which a portion (P) can be stored on or in a packaging element (V),
   - a single-track or multi-track slicing machine (100), in particular a slicer (100), for cutting slices (S) from a product calibre (K), including a discharge unit (17) with several conveyor bands (17a, b, c) for the slices (S), among them a portioning band (17a), which is able to lay several slices (S) at least partially on top of one another to form a portion (P),
   - a horizontal infeed unit (200) downstream of the latter in the direction of travel (10*) for buffering and feeding the portions (P) to the infeed station (301) by means of a plurality of conveyor bands, of which the conveyor bands arranged within a buffer route (30) and equipped with controllable servo drives are used as buffer bands,
   - a controller (1*) for controlling moving parts of the packaging line (1),
   **characterised in that**
   - the controller (1*) of the packaging line (1) is designed in such a manner that it is capable of performing the method according to any of the preceding claims.

7. The packaging line according to claim 6,
   **characterised in that**
   the discharge unit (17) further comprises, in addition to the portioning band (17a)

   - a subsequent discharge band (17b) for transporting the portion (P) away from the portioning band (17a) and/or
   - a transfer band (17c) for transferring a portion (P) to a downstream unit, in particular a discharge feeder unit (200).

8. The packaging line according to claim 6 or 7,
   **characterised in that**
   the packaging line (1) comprises

   - a weighing band (22) with a scale (29) for weighing a portion (P) and/or
   - a discharge band (23), in particular a rocker band (23) for discharging a portion (P) and/or
   - a distribution band (24) or spreader band (24) to bring portions (P) running side by side onto the track spacing of the packaging machine (300) and/or
   - a balancing band (25) to bring portions (P) running side by side in the direction of travel (10) to exactly the same position
and/or
- a format band (26) for assembling portions (P) into at least one format (F) with positional accuracy
and/or
- at least one buffer band (27.1, 27.2, 27.3) for buffering at least one format (F)
and/or
- an infeed band (28) for transferring, in particular dropping, a format (F) onto at least one packaging means (V).

**Revendications**

1. Procédé de fonctionnement d'une ligne d'emballage (1) comprenant

   - une machine d'emballage (300) dotée d'une station de mise en place (301) dans laquelle une portion (P) est déposée sur ou dans un moyen d'emballage (V),
   - une machine à trancher à une ou plusieurs voies (100), en particulier une trancheuse (100), destinée à séparer des tranches (S) d'un calibre de produit (K), comprenant une unité d'évacuation (17) qui est pourvue de plusieurs bandes transporteuses consécutives pour les tranches (S) et qui est capable de superposer au moins partiellement plusieurs tranches (S) pour former une portion (P),
   - une unité d'amenée et de mise en place (200) horizontale, située en aval de celle-ci dans le sens de défilement (10*), destinée à mettre en tampon des portions (P) et à les amener vers la station de mise en place (301) au moyen de plusieurs bandes transporteuses, parmi lesquelles les bandes transporteuses disposées à l'intérieur d'un trajet de mise en tampon (30) et équipées d'entraînements asservis commandables sont utilisées comme bandes de mise en tampon,
   - l'unité d'évacuation (17) et l'unité d'amenée et de mise en place (200) formant ensemble un trajet de transport (217) pour les portions (P),
   - sachant qu'en fonctionnement normal, la machine à trancher (100) ne fonctionne qu'avec une capacité de découpe réelle telle que, par voie, le nombre de portions (P) présentes sur le trajet de transport corresponde au maximum au nombre de positions de dépose prévues chacune pour une portion (P) et présentes dans le trajet de mise en tampon (30), dites positions tampons,
   **caractérisé en ce que**
   - dans le cas particulier d'une interruption prévisible de l'opération de découpe de la machine à trancher (1), pendant une période de préparation préalable à l'interruption, la machine à trancher (100) est temporairement exploitée avec une capacité de découpe réelle tellement plus élevée que, par voie (SP1 - SP4), le nombre de portions (P) présentes dans le trajet de transport (217) atteigne un nombre spécial qui est supérieur, d'une différence spéciale prédéfinie, au nombre de positions tampons sur le trajet de mise en tampon (30), c'est-à-dire positions tampons libres et occupées + différence spéciale autorisée = nombre spécial accru de portions sur l'ensemble du trajet de transport (217), sachant que la période de préparation est fixée immédiatement avant l'arrêt de l'opération de découpe et que la durée de la période de préparation est choisie de telle sorte que le nombre spécial soit atteint lors de la dernière coupe avant l'arrêt de l'opération de découpe.

2. Procédé selon la revendication précédente,
   **caractérisé en ce que**
   le nombre spécial par voie (SP1 - SP4) correspond au maximum au nombre total de positions de dépose prévues pour les portions (P) et présentes dans le trajet de transport (217).

3. Procédé selon l'une des revendications précédentes,
   **caractérisé en ce que**

   - la période de préparation commence le plus tard possible,
   - en particulier suffisamment tard pour que le nombre spécial souhaité puisse encore être constitué juste avant l'interruption de l'opération de découpe.

4. Procédé selon l'une des revendications précédentes, dans lequel

   - les moyens d'emballage (V) sont avancés pas à pas dans la machine d'emballage (300) en recevant un format (F) composé de plusieurs portions par voie (SP1 - SP4),
   - des portions (P) sont assemblées en formats (F) à l'aide de l'unité d'amenée et de mise en place (200),

**caractérisé en ce que**

le nombre spécial par voie (SP1 - SP4) correspond au maximum au nombre de portions par voie (SP1 - SP4) de deux formats (F), au maximum au nombre de portions par voie (SP1 - SP4) d'un format (F).

5. Procédé selon l'une des revendications précédentes,
   **caractérisé en ce que**
   en cas d'arrêt de l'unité d'évacuation (17) et/ou de l'unité d'amenée et de mise en place (200), les portions se trouvant sur les bandes non tampons sont éjectées de la ligne d'emballage (1) lors du redémarrage.

6. Ligne d'emballage (1) pour la fabrication et l'emballage de portions (P) constituées chacune d'une ou plusieurs tranches (S) séparées d'un produit de calibre (K), comprenant

   - une machine d'emballage (300) dotée d'une station de mise en place (301) dans laquelle une portion (P) peut être déposée sur ou dans un élément d'emballage (V),
   - une machine à trancher à une ou plusieurs voies (100), en particulier une trancheuse (100), destinée à séparer des tranches (S) d'un calibre de produit (K), comprenant une unité d'évacuation (17) qui est pourvue de plusieurs bandes transporteuses (17a, b, c) pour les tranches (S), dont une bande de portionnement (17a) qui est capable de superposer au moins partiellement plusieurs tranches (S) pour former une portion (P),
   - une unité d'amenée et de mise en place (200) horizontale, située en aval de celle-ci dans le sens de défilement (10*), destinée à mettre en tampon des portions (P) et à les amener vers la station de mise en place (301) au moyen de plusieurs bandes transporteuses, parmi lesquelles les bandes transporteuses disposées à l'intérieur d'un trajet de mise en tampon (30) et équipées d'entraînements asservis commandables sont utilisées comme bandes de mise en tampon,
   - une commande (1*) pour commander les parties mobiles de la ligne d'emballage (1),
   **caractérisée en ce que**
   - la commande (1*) de la ligne d'emballage (1) est conçue de manière à pouvoir mettre en œuvre le procédé selon l'une des revendications précédentes.

7. Ligne d'emballage selon la revendication 6,
   **caractérisée en ce que**
   l'unité d'évacuation (17) comprend, outre la bande de portionnement (17a),

   - une bande de déchargement (17b) qui suit celle-ci et est destinée à évacuer la portion (P) de la bande de portionnement (17a),
   et/ou
   - une bande de transfert (17c) destinée à transférer une portion (P) vers une unité suivante, en particulier vers une unité d'amenée et d'évacuation (200).

8. Ligne d'emballage selon la revendication 6 ou 7,
   **caractérisée en ce que**
   la ligne d'emballage (1) comprend

   - une bande de pesage (22) équipée d'une balance (29) pour peser une portion (P),
   et/ou
   - une bande d'éjection (23), en particulier une bande à bascule (23) destinée à éjecter une portion (P),
   et/ou
   - une bande de répartition (24) ou une bande d'écartement (24) destinée à amener des portions (P), se déplaçant côte à côte, à l'écartement entre les voies de la machine d'emballage (300),
   et/ou
   - une bande de compensation (25) destinée à amener des portions (P), se déplaçant côte à côte, exactement à la même position dans le sens de défilement (10),
   et/ou
   - une bande de format (26) destinée à assembler avec précision des portions (P) en au moins un format (F),
   et/ou
   - au moins une bande de mise en tampon (27.1, 27.2, 27.3) destinée à mettre en tampon au moins un format (F),
   et/ou
   - une bande de mise en place (28) destinée à transférer, en particulier déverser, un format (F) sur au moins un moyen d'emballage (V).

Fig. 1a

Fig. 1b

Fig. 2a

Fig. 2b

Fig. 3a

EP 4 372 503 B1

Fig. 3b

Fig. 4a

Fig. 4b

Normalbetrieb

Sonderbetrieb

Fig. 5

Fig. 6a

Fig. 6b

Sonderbetrieb

BELADEN

ET ET ET ET ET ET ET ET ET F

P

33
27
21
15

t

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102021102385 A1
- DE 102017105919 A1
- DE 102021105098 A1